# EUROPEAN PATENT APPLICATION

(11) **EP 1 693 664 A1**
(43) Date of publication of application: **23.08.2006**
(21) Application number: 05075411.8
(22) Date of filing: 21.02.2005
(51) Int. Cl.: G01N 17/02

(54) **Method and apparatus detecting corrosion &/or deposit formation in water systems**

(71) Applicant: Afcor Ltd., Potters Bar Herts EN6 1HS (GB)
(72) Inventor: Desmet, Roger, 9000 Gent (BE)

(57) **Abstract**

The invention includes the use of a cell with a cathode and anode. This cell can be easily built into a heat control circuit. An electrochemical potential difference of at least 5OmV and maximum 1V is applied between the two electrodes. Applying this electrochemical potential difference generates a current of electrons between cathode and anode. This current can be measured at any time, and corrosion &/or deposit formation can be continuously monitored.

## Description

In the current state of the technique test coupons are used to detect deposit formation. These test coupons are weighed, and then brought into the circuit. After having stayed in the medium for a specific time, they are removed and weighed again. Bringing the test coupons into the circuit makes it necessary to temporarily neutralise the circuit.
Therefore , when measuring deposit formation the heat control is not working.
It is also known that electrode-measuring equipment is used to determine corrosion.
Likewise this requires temporarily neutralising the heat control circuit as the electrodes should be brought into the circuit. Again this implies that the heat control can not continue to function.
In addition this measuring equipment is quite expensive. Furthermore , the determination of corrosion and deposit formation is carried out independently and not simultaneously.

The goal of this invention is to continuously register corrosion or deposit formation with a single tool

The invention includes the use of a cell with a cathode and anode.This cell can be easily built into the circuit. An electrochemical potential difference of at least 50 Mv and maximum 1V is applied between the two electrodes. Applying this electrochemical potential difference generates a current of electrons between cathode and anode. This current can be measured at any time, and corrosion can thus be continuously monitored. The same goes for the deposit formation: the cell is continuously subjected to deposit formation as it is connected into the circuit. The deposits increase the electrical resistance or the circuit, which influences the electron current.

In a first version of the invention, the cathode and anode are made of the same metal, e.g. steel or cast iron. Byneans of a voltage source, an external potential difference is applied between both electrodes. Which metal will be used for the electrodes depends on the most critical components of the heat control circuit, meaning the components of the heat control circuit that are most susceptible to corrosion. The potential difference applied between the cathode and anode using the voltage source, in order to create a potential difference between cathode and anode, stimulates chemical reactions (see further). These reactions will enhance corrosion on the metal connected as the anode, and the formation of deposits on the metal connected as cathode.

In a second version of the invention, cathode and anode are made of different metals. The cathode can e.g. be made of copper, silver, or gold, while the anode can be made out of aluminium, zinc, steel or cast iron. The choice for the anode depends on the metal in the heat control circuit most susceptible to corrosion. For example, if the heat control circuit consists of a cast iron boiler, steel pipes and aluminium radiators, an aluminium anode will be chosen, as aluminium is most susceptible to corrosion. This generates a galvanic connection between the two metals and consequently an electrochemical potential difference that stimulates the chemical reactions (see further)- Because of this, the metal connected as anode will corrode and deposits will be formed on the metal connected as cathode.

The invention also relates to a procedure to determine corrosion or deposit formation in a heat control circuit with a liquid medium. The following steps are part of the procedure:
- installing the cell with cathode and anode in the heat control circuit;
- applying an electrochemical potential difference between cathode and anode of at least 50mV and maximum 1V, to generate the electron current;
- measuring the electron current to determine corrosion or deposit formation.

An alternative to determine the corrosion or the deposits in a heat control circuit with a liquid medium consists of the following steps:
- installing the cell with cathode and anode in the heat control circuit;
- applying an electrochemical potential difference between cathode and anode of at least 50mV and maximum 1V to generate the electron current;
- weighing the anode or the cathode to determine the corrosion or the deposits.

A control signal generated by a monitoring station can call-up the measured value of the electron current. This enables monitoring the corrosion and formed deposits from a distance.

The invention also relates to a procedure that is characterised by determining the metal that is most susceptible to corrosion in the heat control circuit. This determines the metals that have to be used as cathode and anode.

The invention will now be described on the basis of a sketch in which
figure 1 represents a first version of the invention in which the anode and the cathode are made out of the same metal
figure 2 represents a second version of the invention in which anode and cathode are made out of different metals
figure 3 represents the results of measuring the electron current between an aluminium anode and a copper cathode
figure 4 represents a calibration graph of the amount of deposits in function of the electron current [the customer has to draw up this curve]

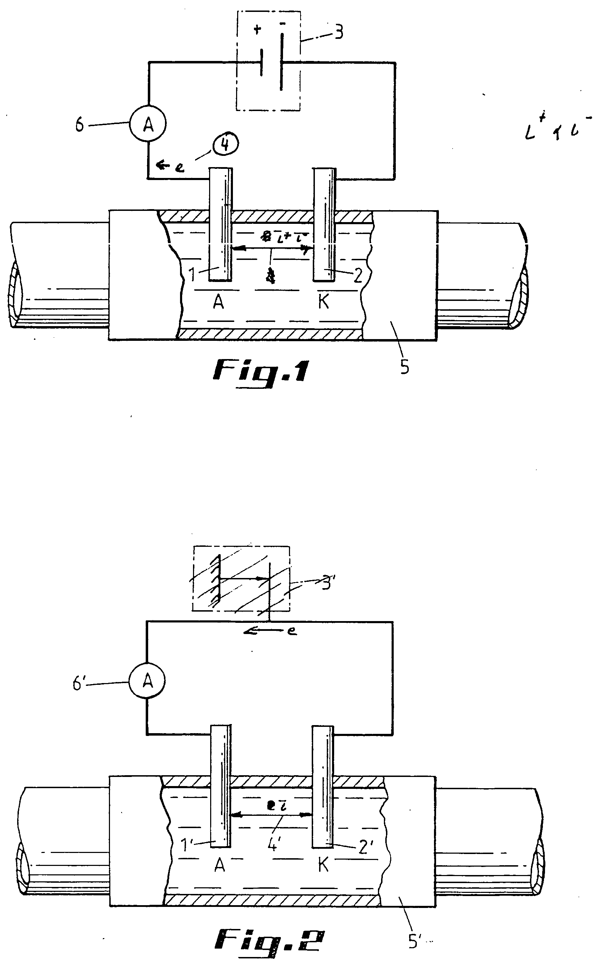

The cell (5) from figure 1 contains an anode (1) that has to be connected to the positive pole of a voltage source (3) and a cathode (2) (made out of the same material) that has to be connected to the negative pole of the voltage source. Assume that the cathode (2) and the anode (1) a are made out of aluminium (A1). Applying a potential difference between the anode (1) and the cathode (2) of at least 50mV and maximum 1V with the voltage source (3) generates an electron current (4) from cathode (2) to anode (1) and an ionic current (7) through the medium. The metal of the anode is corroded because of the following anodic reaction:

Al → Al³⁺ 3e⁻.

The electrons are carried from the cathode to the anode via the voltage source. This transport of electrons generates the electron current that has to be measured, using an O-rezistance amperemeter (6) inserted in the circuit consisting of cathode, anode and voltage source. As the electrons are transported to the anode, the following reaction occurs in the medium:

O₂ + 2H₂O + 4e⁻ → 40H⁻.

The hydroxyl ions (OH⁻) increase the pH of the medium in the neighbourhood of the cathode, making the medium more alkaline. This stimulates the precipitation on the cathode of, for example, calcium or magnesium carbonate present in the medium (e.g. water) of the heat control circuit. With calcium for example, the following reaction occurs:

Ca(HCO₃)₂ + 2OH⁻ → CaCO₃↓ + CO₂ + 2H₂O.

With magnesium the reaction is analogous,

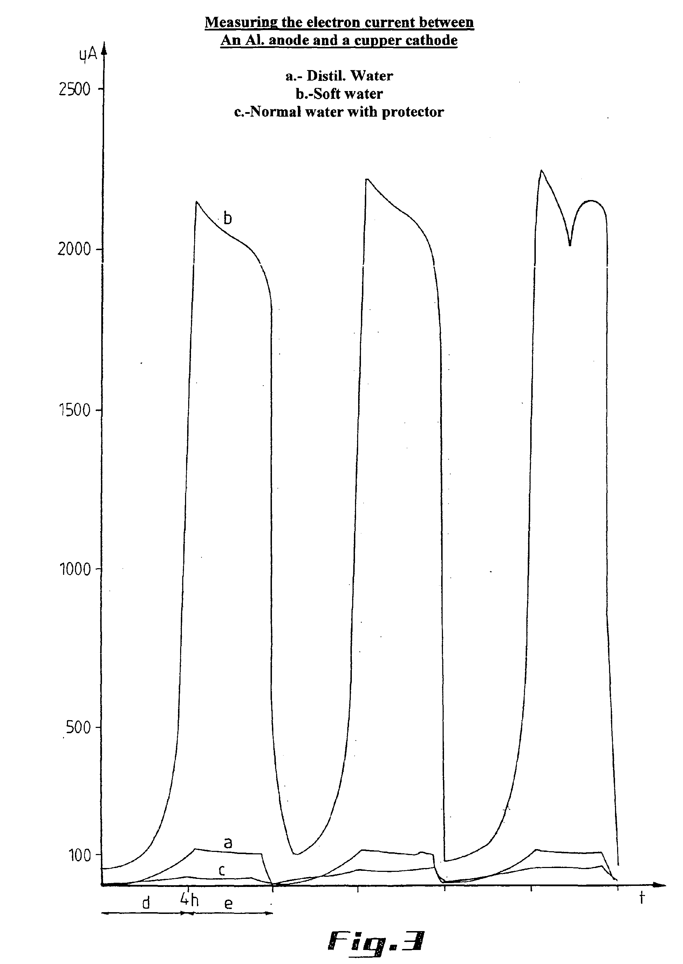

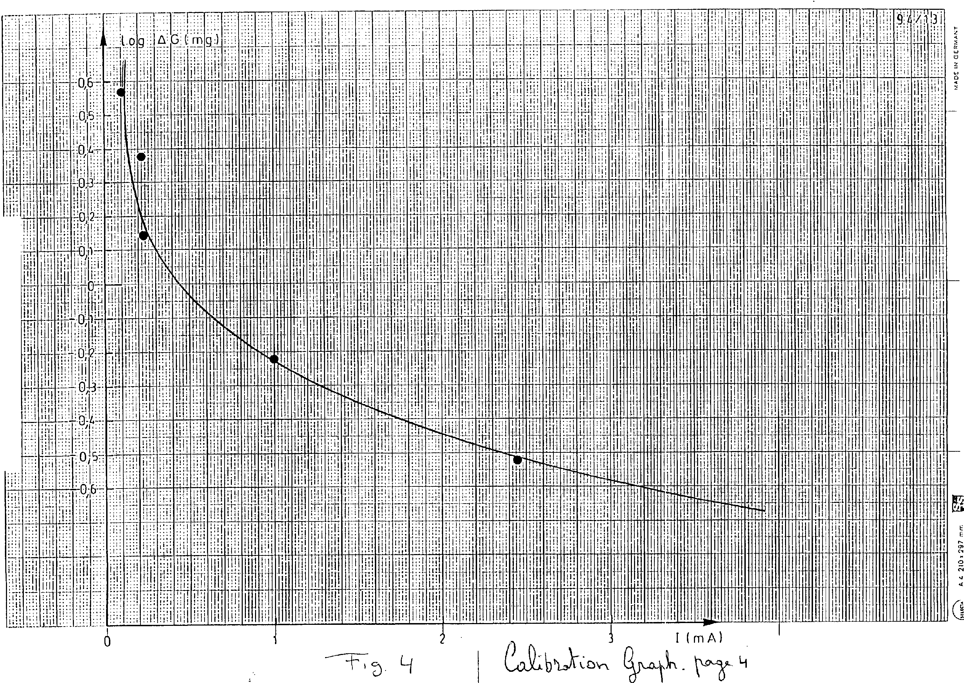

From the anodic reaction can be concluded that the anode ionises. This stimulates corrosion and the anode loses weight, This loss of weight of the anode and the electron current are thus both a measure for the corrosivity of the medium. The last reaction shows that deposits are formed on the cathode, which increases the weight of the cathode. The increase in weight of the cathode is thus a measure for deposit formation. Both reactions are expedited by the galvanic coupling, which enhances corrosion and the formation of deposits. Thus, a very accurate method arises to measure both phenomena. Due to the increase of deposits the electrical resistance in the circuit will rise, which will cause a declination of the current. The measured current is thus a measure for the deposit formation. Using a calibration graph the value of the current can be converted into a value for the deposit formation. This is illustrated in figure 4.

A cell (5') in figure 2 contains an anode (1') and a cathode (2') made of another metal than the anode, which are short-circuited over a 0-resistance amperemeter (6'). A Nernst potential difference is generated due to the fact that the anode and cathode are made of different materials. Due to this Nernst potential difference, an electron current (4') and an ionic current (7') are being generated. The same reactions occur as observed in figure 1.

Results of electron current measures through cell 2 are represented in figure 3, the current was measured in distilled water (a), descaled water (b) and tap water (c) that had been heated up to 80°C for 4 hours and consequently cooled down to room temperature for another 4 hours. During the heating phase (d) it can be observed that the current increases and thus also the corrosion. While cooling down (e) the current and corrosion decrease. The current measured in descaled water is much higher than that for tap water. This can be explained as follows: the lime in the tap water (c) increases the resistance in the circuit and according to Ohm's principle the current decreases. Using distilled water (a) enhances the corrosion speed and thus the current is higher than when using tap water (c).

Installing the cell in a by-pass between two stopcocks is the better alternative. Especially using the method that weighs the cathode and anode, because then the cell can be cleaned or replaced without neutralising the heat control circuit. Moreover, the anode and cathode can be more easily removed to weigh them.

This invention opens the opportunity to monitor corrosion and deposit formation at a distance. One can for example, measure the electron current at certain points of time, and file the result in a memory device. The control signal of the monitoring station will then transfer the content of this memory device. Another possibility is to send the value of electron current directly to the monitoring station to guard the corrosion and deposit formation. Yet another alternative is to use weighbeams to determine the weight of anode and cathode. An elongation of springs is a measure for the weight of anode and cathode. The elongation can be determined and registered with known equipment and consequently sent to the monitoring station.

## Claims

1. To detect corrosion and/or deposit formation in a heat control circuit with a liquid medium, a cell is used containing an anode and cathode, between which an electrochemical potential difference of at least 50mV and maximum 1V is applied.

2. This use (as described in conclusion 1) is typified by the fact that cathode and anode are made of the same metal, and that a potential difference is applied between both electrodes using a voltage source.

3. The use as described in conclusion 2, is typified by the fact that the cathode and anode are made of steel or cast iron.

4. The use as described in conclusion 1, is typified by the fact that cathode and anode are made of different metals, which are short-circuited by a galvanometer.

5. The use as described in conclusion 4, is typified by the fact that the cathode is made of copper, silver or gold, and the anode is made of aluminium, zinc, steel or cast iron.

6. Another use of the cell described in conclusions 1-5 is to install it in the heat control circuit in by-pass between two stopcocks.

7. Methodology to detect corrosion or deposit formation in a heat control circuit with a liquid medium, is typified by the following points:
- installing a cell with a cathode and anode in the heat control circuit;
- applying an electrochemical potential difference between cathode and anode of at least 50mV and maximum IV, to generate an electron current;
- measuring the electron current to determine the corrosion or deposit formation.

8. Methodology to detect corrosion or deposit formation in a heat control circuit with a liquid medium, is typified by the following points:
- Installing a cell with a cathode and anode in the heat control circuit;
- Applying an electrochemical potential difference between cathode and anode of at least 50mV and maximum 1V, to generate an electron current;
- Weighing the anode respectively the cathode to determine the corrosion or deposit formation.

9. Methodology as described in conclusion 7, is typified by the fact that after having measured the electron current the measured current value is called-up by a control signal of a monitoring station and sent to this station.

10. Methodology as described in conclusions 7, 8 or 9 is typified by the fact that the metal most sensitive to corrosion in the heat control circuit is determined.

11. Installation to perform the methodology described in conclusions 7,8,9 or 10, is typified by a cell with a cathode and anode and devices to apply an electrochemical potential difference between cathode and anode of at least 50mV and maximum 1V.
